# EUROPÄISCHE PATENTSCHRIFT

(11) **EP 0 798 099 B1**
(45) Veröffentlichungstag und Bekanntmachung des Hinweises auf die Patenterteilung: **11.10.2000**
(21) Anmeldenummer: 97104654.5
(22) Anmeldetag: 19.03.1997
(51) Int. Cl.: B29C 65/34, G05B 19/12, G05B 19/042

(54) **Vorrichtung zum Verschweissen von Formteilen**
Apparatus for welding formed parts
Dispositif pour le soudage d'éléments formés

(30) Priorität: 28.03.1996 CH 81396
(43) Veröffentlichungstag der Anmeldung: 01.10.1997
(73) Patentinhaber: Georg Fischer Haustechnik AG, 8201 Schaffhausen (CH)
(72) Erfinder: Porfido, Erasmo, 8200 Schaffhausen (CH); Steiner, Jürg, 8480 Marthalen (CH)
(74) Vertreter: Weiss, Wolfgang, Dr.

(56) Entgegenhaltungen:
- EP-A- 0 076 043
- EP-A- 0 353 912
- EP-A- 0 441 650
- EP-A- 0 649 077
- WO-A-96/16358
- GB-A- 2 174 955
- US-A- 4 684 789
- US-A- 5 229 949

## Beschreibung

Die vorliegende Erfindung betrifft eine Vorrichtung zum Verschweissen von Formteilen aus Kunststoff gemäss dem Oberbegriff von Anspruch 1.

Zum Verbinden von rohrförmigen Formteilen aus Kunststoff, werden in der Regel Schweissmuffen verwendet. Diese Muffen weisen ein Heizelement auf. Durch Zuführung von elektrischer Heizenergie wird das Heizelement erwärmt, und die Muffe wird mit dem rohrformigen Formteil verschweisst. Auf diese Art werden unterschiedlichste Formteile in Rohrleitungssystemen miteinander verbunden. Die für die Schweissung notwendige Energie wird von einem Schweissgerät zugeführt. Diese Geräte sind so ausgelegt, dass für unterschiedliche Formteile unterschiedliche Schweissprogramme eingespeichert sind, die jeweils erforderliche elektrische Energie für den zu schweissenden Formteil freisetzen. Die benötigte Energie hängt vom Material von der Art und der Grösse des Formteiles ab. Die erforderliche Schweisszeit wird ebenfalls von den Formteilparametern gesteuert. Die Schweisszeit beträgt beispielsweise beim Verschweissen von Rohren unter Anwendung einer Heizwendelschweissmuffe mit einem Nenndurchmesser von 63 mm ca. 2 Minuten. Bei grösseren Rohrdimensionen steigt die Schweisszeit entsprechend an. Während dieser Zeit kann keine weitere Schweissung mit dem Schweissgerät erfolgen. Auf der Baustelle sind jedoch oft gleichzeitig viele solcher Schweissungen durchzuführen. Weil aber die Schweissungen zeitlich hintereinander erfolgen müssen, ergibt sich ein grosser Zeitaufwand.

Die bekannten Schweissgeräte sind so ausgelegt, dass bei neuen Formteilen, die geänderten Parameter z.B. Dimension, Werkstoff die geänderte Schweissparameter erfordern, nicht mehr nachträglich ins Schweissgerät einprogrammierbar sind. Daher sind verschiedene Schweissgeräte für verschiedene Formteilkategorien notwendig.

Aus der EP-A-441 650 ist eine Vorrichtung zur Steuerung und Regelung eines Elektroschweissverfahrens bekannt. Die Vorrichtung besteht aus einem Kunststoffgehäuse mit Füssen an der Unterseite und identisch ausgebildeten Handgriffen an der Oberseite. Im Kunststoffgehäuse befindet sich einen Mikroprozessor zur Steuerung und Regelung des Elektroschweissverfahrens. Das Kunststoffgehäuse weist eine Vorderwand auf, die aus einem für Infrarotstrahlung durchlässigen Kunststoffmaterial hergestellt ist. Hinter der Vorderwand sind Geräte zum Senden und Empfangen von Infrarotstrahlung angeordnet. Diese Sende- und Empfangsgeräte können mit weiteren Empfangs- und Sendegeräte ausserhalb der Steuer- und Regelvorrichtung in optischer Verbindung gebracht werden. Über diese optische Verbindungen können Daten, die zur Steuerung und Regelung des Elektroschweissverfahrens notwendig sind, zwischen dem Mikroprozessor und einer externen Schnittstelle ausgetauscht werden. Der Mikroprozessor kann für die Elektroschweissung eines Formteiles aus Kunststoff mit den Schweissparametern, beispielsweise mit der Stromstärke, programmiert werden. Dazu muss das Gehäuse weder geöffnet noch berührt werden, noch müssen Steckverbinderteile mit dem Gehäuse verbunden werden. Die Vorderwand des Gehäuses weist weiterhin einen Einschaltknopf, einen Ausschaltknopf und einen Startknopf zum Starten des Schweissvorgangs auf. Für jedes Formteil mit einer neuen Form oder Grösse muss der Mikroprozessor neu programmiert werden.

Aufgabe der vorliegenden Erfindung ist es, eine Vorrichtung zum Verschweissen von Formteilen zu schaffen, mit welcher der Schweissvorgang an mehreren verschiedenen Formteilen gleichzeitig durchführbar ist.

Erfindungsgemäss wird diese Aufgabe durch die kennzeichnenden Merkmale des Anspruches 1 gelöst.

Weitere vorteilhafte Ausgestaltungen ergeben sich aus den abhängigen Ansprüchen.

Es ist von Vorteil, dass mit der Vorrichtung ohne eine Neuprogrammierung mehrere unterschiedliche Formteile gleichzeitig verschweisst werden können. Dies wird dadurch erreicht, dass die Energiezuführung zu jedem Formteil über Schweisskanäle erfolgt, die unabhängig voneinander regelbar sind. Die benötigte Energie hängt vom Material, von der Grösse und von der Form des Formteils ab. Die Schweissparameter für die unterschiedlichen Formteile sind in der Prozessoreinrichtung gespeichert.

Es ist weiter von Vorteil, dass mit der Vorrichtung auch Formteile mit neuen Grössen, Formen und aus neuen Kunststoffmaterialien geschweisst werden können. Dies wird dadurch erreicht, dass neue Schweissparameter über eine Memorykarte einlesbar und speicherbar sind. Auf einer Memorykarte ist eine grosse Anzahl Schweissparameter speicherbar.

Anhand der beigelegten Figuren wird eine bevorzugte Ausführungsform der Erfindung näher erläutert.

Es zeigen
- Fig. 1: eine erfindungsgemässe Vorrichtung und
- Fig.2: die Vorrichtung aus Fig.1 mit drei angeschlossenen unterschiedlichen Formteilen.

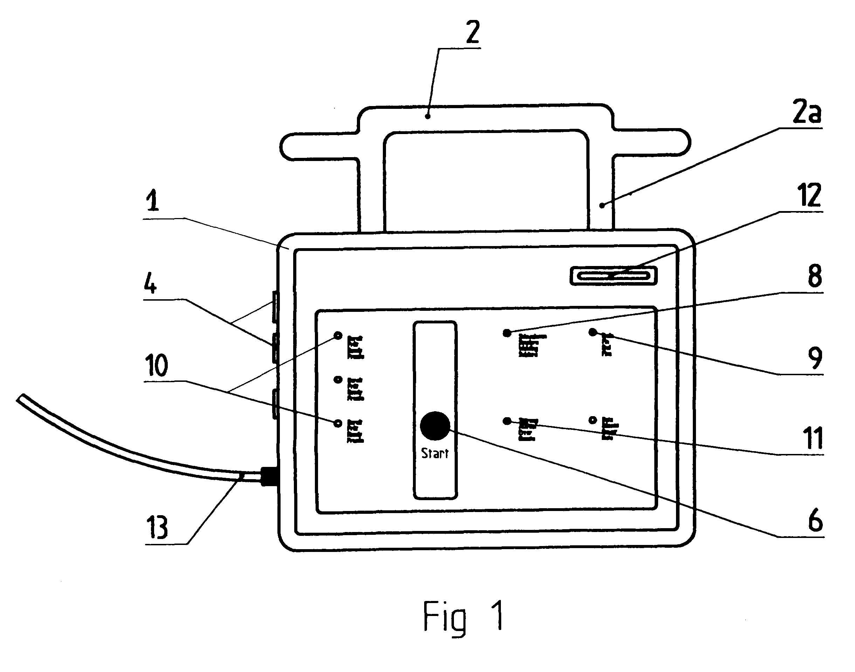

Die Fig.1 zeigt ein Schweissgerät zum Verbinden von Formteilen aus Kunststoff. Das Gerät weist ein Gehäuse 1, das im wesentlichen aus zwei Kunststoffschalen besteht und das die Funktionsaggregate und die Elektronik des Gerätes umschliesst und schützt. Als Transporthilfe , insbesondere auf Baustellen dient ein Handgriff 2. Zu den Funktionsaggregaten des Schweissgerätes gehören insbesondere eine nicht dargestellte Speisungseinheit und eine Regeleinheit. Zur Speisungseinheit gehört ein Netzanschluss 3, ein Transformator und drei Ausgangsklemmen 4 zum Anschliessen der Schweisskabel 15. Die Energiezuführung an die zu verschweissenden Formteile erfolgt über die Ausgangsklemmen 4 und der Schweisskabel 15. Es können mehrere Ausgangsklemmen 4 mit entsprechenden Schweisskabeln 15 vorgesehen sein.

Die Regeleinheit weist eine Prozessoreinrichtung und eine Messeinrichtung auf. Die Messeinrichtung dient dazu, um ein über ein Schweisskabel 15 mit dem Schweissgerät verbundenes Formteil zu identifizieren. Dies erfolgt durch eine Messung eines am Formteil angeordneten Widerstandes. Aufgrund des Widerstandswertes erkennt die Prozessoreinheit die Schweissparameter und stellt den nötigen Schweissstrom sowie die erforderliche Schweisszeit ein. Mit diesen Schweissparametern kann die Energiezufuhr gleichzeitig an mehreren von einander unterschiedlichen Formteilen gesteuert werden. Dieser Schweissvorgang bedingt das gleichzeitige Erkennen und Regeln von Schweisskanälen.

In der Prozessoreinrichtung sind alle Schweissdaten von den marktüblichen Formteilen gespeichert. Auf dem Prozessorprint befinden sich die Prozessor- und Messschaltungen, die Bedienund Anzeigeelemente und der Memorykartenstecker. Über eine Schnittstelle 12 am Gehäuse kann eine Memorykarte eingelesen werden, auf der die Schweissparameter eines neuen Formteiles gespeichert sind. Diese Daten sind über die Prozessoreinheit einlesbar und werden dort abgespeichert.

An der Frontfläche des Gehäuses sind die Bedienungselemente wie ein Startknopf 6 sowie verschiedene Anzeigeelemente angeordnet.

Weitere vorteilhafte Ausgestaltungen ergeben sich aus den abhängigen Ansprüchen.

Die Anzeigeelemente 7, 8 und 9 zeigen Betriebszustände, Bereit, Schweissen und Ende, eines Schweissvorganges an. Für jeden Schweisskanal ist eine Anzeige 10 zugeordnet, die anzeigt, ob der betreffende Schweisskanal sich im Schweissvorgang befindet. Anzeige 11 zeigt die Störungen während eines Schweissvorganges an.

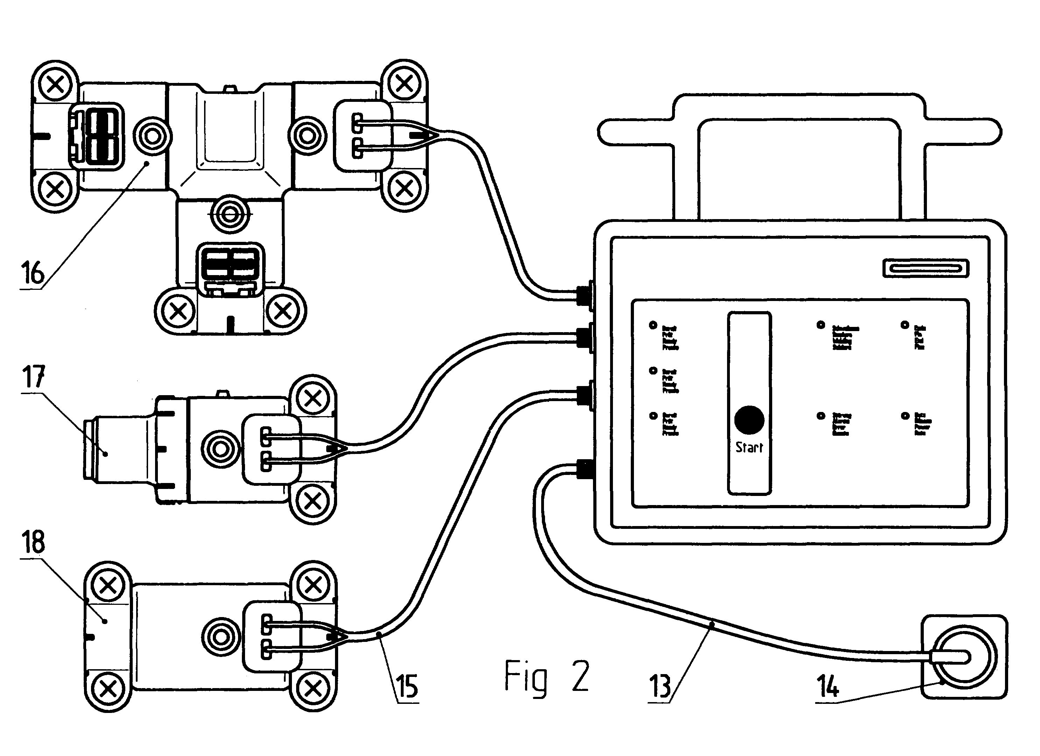

Fig.2 zeigt eine Anwendung des Schweissgerätes. Das Schweissgerät ist am Netzanschluss 3 mittels eines Netzkabel 13 über eine Steckdose 14 mit dem Stromnetz verbunden. Ueber Schweisskabel 15 sind drei unterschiedliche Formteile 16, 17 und 18 mit dem Schweissgerät verbunden. Formteil 16 ist ein T-Stück mit drei Abgängen, wobei jeder Abgang eine Schweisszone aufweist. Formteil 17 ist ein Übergangsstück und Formteil 18 eine Heizwendelschweissmuffe mit einem grossen Nenndurchmesser. Alle Formteile 16 bis 18 weisen einen vorbestimmten Widerstand auf, der auf einer Platine im Formteil festgelegt ist. Der Fittingwiderstand ist der Widerstand des Heizwendels. Die Identifizierung des Fittings erfolgt über den gemessenen Produktwiderstand und den Heizwendelwiderstand. Diese sind von der Prozessoreinheit erkennbar.

Die Schweissparameter die zu einem Fitting gehören sind der Schweissstrom und die Schweisszeit.

Zur Auslösung eines Schweissvorganges muss der Anwender den Startknopf 6 betätigen, die Schweissung wird gestartet. Das Schweissgerät erkennt und regelt gleichzeitig alle angeschlossenen Schweisskanäle. Jedes angeschlossene Formteil 16 bis 18 wird mit dem programmierten Strom während der programmierten Zeit mit einem rohrförmigen Element verschweisst. Die Anzeigenleuchten 10 der einzelnen Schweiss- oder Energiezuführungskanäle erlöschen, sobald die Schweissung erfolgreich beendet ist. Die Anzeige 9 leuchtet auf, sobald diejenige Schweissung mit der längsten Schweisszeit beendet ist und zeigt an, dass das Schweissgerät für nachfolgende Schweissungen bereit ist.

Mit dem beschriebenen Schweissgerät ist es möglich, mehrere Schweissungen mit gleicher oder unterschiedlicher Schweissenergie durchzuführen. Da alle Schweisskanäle unabhängig voneinander sind, ist es möglich, auch nur eine oder zwei Schweissungen gleichzeitig vorzunehmen.

Der Vorteil der beschriebenen Erfindung liegt darin, dass mehrere Schweissungen gleichzeitig durchführbar sind, wobei die Schweissparameter unterschiedlich sein können. Das ist zeitsparend und wirtschaftlich.

Zudem können nachträgliche Aenderungen bzw. Erweiterungen des Formteilangebotes, die zu neuen Schweissparametern führen, jederzeit in die erfindungsgemässe Vorrichtung mittels Memorykarte eingelesen werden.

## Patentansprüche

1. Vorrichtung zum Verschweissen von Formteilen (16, 17, 18) aus Kunststoff mit mindestens einer ein Heizelement aus einem Widerstandsdraht aufweisenden Schweisspartie zur Herstellung einer Schweissverbindung mit mindestens einem weiteren Kunststoffteil, beispielsweise einem Rohrleitungselement, wobei das Formteil (16, 17, 18) einen die Formteilart identifizierenden Widerstand aufweist, und wobei die Vorrichtung eine Prozessoreinrichtung zur Verarbeitung der Schweissparametern zur Steuerung und Regelung des Schweissvorganges aufweist, dadurch gekennzeichnet, dass Mittel vorhanden sind, die das gleichzeitige Erkennen und Regeln von unterschiedlichen Schweissparametern erlauben, so dass mehrere Schweissvorgänge unabhängig voneinander gleichzeitig durchführbar sind.

2. Vorrichtung nach Anspruch 1, dadurch gekennzeichnet, dass die Energiezuführung zu jedem Formteil (16, 17, 18) über Schweisskanäle erfolgt, die unabhängig voneinander regelbar sind.

3. Vorrichtung nach Anspruch 1, dadurch gekennzeichnet, dass die Formteile (16, 17, 18) unabhängig voneinander erkennbar sind.

4. Vorrichtung nach einem der Ansprüche 1 bis 3, dadurch gekennzeichnet, dass neue Schweissparameter über eine Memorykarte einlesbar und speicherbar sind.

## Claims

1. Apparatus for welding moulded parts (16, 17, 18) made of plastic, with at least one welding portion having a heating element comprising a resistance wire for establishing a welded connection with at least one further part of plastic, for example a pipeline element, the moulded part (16, 17, 18) having a resistance identifying the type of moulded part, and the apparatus having a processor device for processing the welding parameters for open-loop and closed-loop control of the welding operation, characterized in that there are means which allow the simultaneous identification and closed-loop control of different welding parameters, so that a number of welding operations can be carried out at the same time independently of one another.

2. Apparatus according to Claim 1, characterized in that the supplying of energy to each moulded part (16, 17, 18) takes place via welding channels which can be controlled independently of one another.

3. Apparatus according to Claim 1, characterized in that the moulded parts (16, 17, 18) can be identified independently of one another.

4. Apparatus according to one of Claims 1 to 3, characterized in that new welding parameters can be read in and stored by means of a memory card.

## Revendications

1. Dispositif pour le soudage d'éléments formés (16, 17, 18) en matière plastique avec au moins une partie à souder présentant un élément chauffant constitué d'un fil résistant, pour la réalisation d'un assemblage soudé avec au moins un autre élément en matière plastique, par exemple un élément de conduite tubulaire, dans lequel l'élément formé (16, 17, 18) présente une résistance identifiant le type d'élément formé, et dans lequel le dispositif présente un équipement à processeur pour le traitement des paramètres de soudage en vue de la commande et de la régulation de l'opération de soudage, caractérisé en ce qu'il comprend des moyens qui permettent la reconnaissance et la régulation simultanées de différents paramètres de soudage, de telle sorte que plusieurs opérations de soudage puissent être exécutées en même temps indépendamment les unes des autres.

2. Dispositif suivant la revendication 1, caractérisé en ce que l'apport d'énergie à chaque élément formé (16, 17, 18) est effectué par des canaux de soudage, qui peuvent être régulés indépendamment les uns des autres.

3. Dispositif suivant la revendication 1, caractérisé en ce que les éléments formés (16, 17, 18) sont reconnaissables indépendamment les uns des autres.

4. Dispositif suivant l'une quelconque des revendications 1 à 3, caractérisé en ce que de nouveaux paramètres de soudage peuvent être lus et mémorisés au moyen d'une carte mémoire.
